Europäisches Patentamt

European Patent Office

Office européen des brevets

(19)

(11) Veröffentlichungsnummer: **0 315 820**
**A1**

## (12) EUROPÄISCHE PATENTANMELDUNG

(21) Anmeldenummer: **88117694.5**

(22) Anmeldetag: **25.10.88**

(51) Int. Cl.⁴: **B65G 17/02 , B65G 15/08**

(30) Priorität: **11.11.87 DE 3738299**

(43) Veröffentlichungstag der Anmeldung:
**17.05.89 Patentblatt 89/20**

(84) Benannte Vertragsstaaten:
**AT BE CH DE ES FR GB GR IT LI LU NL SE**

(71) Anmelder: **O & K Orenstein & Koppel Aktiengesellschaft**
**Brunsbütteler Damm 144**
**D-1000 Berlin(DE)**

(72) Erfinder: **Hartwig, Markus, Dipl.-Ing.**
**Heinricht-Brüning-Strasse 6**
**D-5000 Köln 51(DE)**

(54) **Verfahren und Mitnehmerwagen zum Führen von zu einem Schlauch zusammengerollten Förderbändern.**

(57) Vorgeschlagen werden ein Verfahren und ein Mitnehmerwagen zum Führen von zu einem Schlauch zusammengerollten Förderbändern, insbesondere in Kurven. Die Mitnehmerwagen werden in geraden Streckenbereichen horizontal geführt und im Kurvenbereich dergestalt gedreht geführt, daß die durch den Mittelpunkt der Förderseile oder Ketten sowie den Mittelpunkt des zusammengerollten Förderbandes gelegte Ebene immer senkrecht zur Kurven- bzw. Umlenkrichtung verläuft. Vor und nach der Kurve bzw. der Umlenkung in der jeweiligen Station werden die den Fördergurt tragenden Mitnehmerwagen in die entsprechende, maximal senkrechte Position gedreht bzw. in die horizontale Position zurückgedreht.

Fig. 1

# Verfahren und Mitnehmerwagen zum Führen von zu einem Schlauch zusammengerollten Förderbändern

Die Erfindung betrifft ein Verfahren zum Führen von zu einem Schlauch zusammengerollten Förderbändern, insbesondere in vertikalen und/oder horizontalen Kurven, indem das Förderband im Bereich einer Station zusammengerollt und in diesem Zustand in von Zugmitteln gezogenen, mit einer entsprechenden Ausnehmung versehenen beabstandeten Mitnehmerwagen eingebracht wird.

Durch die DE-PS 12 03 672 ist eine Fördereinrichtung mit einem zu einem Schlauch zusammenrollbaren Förderband bekannt, die für senkrechte, steile und waagerechte Förderung von Schüttgütern eingesetzt werden soll. Es sind für die senkrechte bzw. steile Förderung mehrere, an seitlich verlaufende Förderseile an- und abkuppelbare Klemmgeräte vorgesehen, die des weiteren mit zusätzlichen Tragseilen zusammenwirken. An den Umlenkstellen werden die Förderseile von den Klemmgeräten getrennt bzw. mit diesem verbunden. Das zusammengerollte Förderband wird von Bauteilen des Klemmgerätes allseitig umschlossen. Nachteile dieser Fördereinrichtung sind darin zu sehen, daß sie entweder nur für die senkrechte oder aber nur für die waagerechte Förderung eingesetzt werden kann. Ein Durchfahren von Kurven ist hier weder möglich noch durch den beschriebenen Aufbau erkennbar.

Darüberhinaus ist durch die DE-PS 26 05 683 eine Steilförderanlage bekannt, die insbesondere als Sessellift- oder Schleppliftanlage ausgebildet ist. Es sind mindestens zwei prallel geführte, ein Seilpaar bildende Seile vorgesehen, die als die Gehänge tragenden Förderseile über um vertikale Achsen drehbare Umlenkräder und um horizontale Achsen drehbare Führungsrollen geführt sind. Ferner ist mindestens eine am Seilpaar angreifende Mehrfachseilklemme vorgesehen, an welchem eine ein Fördermittel tragende Gehängestange schwenkbar aufgehängt ist.

Durch Verwendung von Gelenken zwischen Seilklemme und Gehängestange sowie Anpassung der Außenfläche der Klemmbacken an die Form der Laufrillen der Räder, können alle Aufgaben variierender Trassenführung mit wechselnden Steigungen und mit seitlichen Richtungsänderungen gelöst werden.

Diese speziell für Seilbahnen ausgelegte Variante der Kurvenführung ist auf das Führen von zu einem Schlauch zusammengerollten Förderbändern in horizontalen und/oder vertikalen Kurven bzw. beim Umlenken der Förderbänder nicht übertragbar.

Der DE-OS 33 47 855 ist ein kurvengängiger Gurtbandförderer zu entnehmen, bei dem der das Schüttgut aufnehmende Traggurt im Bereich einer Kurve durch einen zusätzlichen, den Traggurt zumindest teilweise untergreifenden Deck- oder Hüllgurt unterstützt ist. Durch diesen St.d.T. wird lediglich ein normaler tragrollen- oder girlandengestützter Gurt in Verbindung mit einem weiteren Gurt offenbart, der bei Kurvenfahrt ein Verrutschen des Schüttgutes auffangen soll. Ein geschlossener Gurt in Verbindung mit einem durch Zugmittel bewegbaren Mitnehmerwagen liegt hier nicht vor.

Der Erfindung liegt, ausgehend von der DE-PS 12 03 672 die Aufgabe zugrunde, ein Verfahren sowie einen Mitnehmerwagen zu konzipieren, mit denen es möglich ist, zu einem Schlauch zusammengerollte Förderbänder in allen bekannten horizontalen und/oder vertikalen Kurven sicher führen zu können, wobei das Förderband keine Zugkräfte zu übertragen hat. Ferner sollen Spannweiten überbrückt werden können, ohne daß eine besondere Unterstützung notwendig ist.

Diese Aufgabe wird erfindungsgemäß dadurch gelöst, daß die Mitnehmerwagen dergestalt in die jeweils zu durchfahrende Kurve und/oder die jeweilige Station geführt werden, daß ausgehend vom jeweiligen Kurvenmittelpunkt der davon ausgehende Radiusstrahl immer senkrecht auf der durch die Mittelpunkte der Zugmittel sowie den Mittelpunkt des zusammengerollten Förderbandes gelegten Geraden steht.

Weitere vorteilhafte Verfahrensmerkmale sind den Unteransprüchen 2 bis 9 zu entnehmen.

Durch die Merkmale des erfindungsgemäßen Verfahrens wird sichergestellt, daß zusammengerollte Förderbänder alle horizontalen und/oder vertikalen Kurven durchfahren können, ohne daß irgendwelche Zugkräfte auf den Gurt ausgeübt werden bzw. von diesem übertragen werden müssen. Die Be- und Entladung des Gurtes erfolgt in den Stationen, wobei Be- und Entladestationen prinzipiell gleich ausgebildet sind, lediglich die Fahrtrichtung ist unterschiedlich.

Längenänderungen, die sich aus Wärmedehnungen, verschiedene Beladezustände und sonstige Einflüsse ergeben können, müssen durch Spannvorrichtungen für den Gurt und die Förderseile kompensiert werden.

Kann ein Rollgurt mit seitlicher Überlappung verwendet werden, besteht die Möglichkeit, die Antriebs- bzw. die Spannscheiben horizontal auszurichten. Die Stationen werden dann breiter und flacher. Hierbei ist es notwendig, die Mitnehmerwagen - wie bereits angesprochen - vor der jeweiligen Station um ca. 90° zu drehen, damit diese senkrecht ankommen. Nach dem Abkuppeln von den Förderseilen werden die Mitnehmerwagen senkrecht stehend in horizontaler Ebene umgelenkt und auf der anderen Seite sofort wieder an die Förderseile angekuppelt, wobei der Gurt dann wieder aufgenommen wird. Nach der Trennung der Wagen vom Fördergurt wird dieser als konventioneller Rollgurt weitergeführt und durch Rollenstationen gehalten.

Nach dem Auseinanderrollen des Gurts wird dieser über mehrere Trommeln umgelenkt. Hierbei besteht auch die Möglichkeit der Gurtwendung. Da das Prinzip der Gurtführung und der Seilführung bis auf den Unterschied zwischen Antriebs- und Spannscheiben gleich ist, ist hier auch ein gleichzeitiger Transport in beiden Richtungen möglich. Zur Überwindung größerer Strecken ohne besondere Stützkonstruktionen ist es möglich, die Zugseile als Förderseile zu benutzen und diese - wie bei einer Einseil-Umlaufbahn - über eine größere Distanz zu spannen. An den Stützen sind zur sicheren Auffahrt auf diese Leitbleche vorzusehen, da aufgrund von Wind- und anderen Einflüssen ein Pendeln der Seile nicht vermieden werden kann. Voll- und Leertrum können entweder über- oder nebeneinander geführt werden. Da beide Trume unabhängig voneinander individuell geführt werden können, besteht alternativ die Möglichkeit, verschiedene Trassen für beide Trume zu benutzen.

Im Gegensatz zum St.d.T., wird durch die erfindungsgemäße Lösung eine Möglichkeit aufgezeigt, einen geschlossenen Fördergurt unter Verwendung eines an- und abkuppelbaren Mitnehmerwagens in jedem Bereich der geraden Strecke bzw. jeder Kurve so zu führen, daß keine Kräfte auf den Gurt ausgeübt werden. Die Vorteile eines geschlossenen Fördersystems, werden mit denen einer Seilbahn kombiniert, woraus sich die vorab angeführten Qualitäten ergeben.

Ein Mitnehmerwagen zum Aufnehmen eines zu einem Schlauch zusammengerollten Förderbandes ist dadurch gekennzeichnet, daß die Vertiefung einen etwa U-förmigen Querschnitt aufweist, wobei sich die geraden Schenkel des U-Profiles, den Fördergurt seitlich haltend, vertikal über die Mitte desselben erstrecken. Als Zugmittel kommen an sich bekannte Ketten oder Seile zur Anwendung.

Im Gegensatz zum St.d.T., wird hier eine vom Gewicht her verhältnismäßig leichte sowie von der Funktion her einfach zu bedienende Einrichtung gebildet. Das Gewicht des Fördergurtes wird mittels des gerollten Gurtes auf die Mitnehmerwagen übertragen. Diese leiten die Kraft entweder direkt durch die Laufrollen in Schienen oder U-Stähle ein, in denen die Mitnehmerwagen fahren oder in die Förderseile, die dann als Fördermittel dienen.

Da die Wagen in den horizontalen Kurven senkrecht zur Kurvenrichtung stehen , müssen die entstehenden Eigengewichtskräfte entweder durch besonders geformte Spurkränze oder durch zusätzliche Laufrollen aufgenommen werden.

Befindet sich die Überlappung des Gurtes oben und/oder sind große Leistungen bzw. Steigungen zu bewältigen, ist eine Vorrichtung zum Festhalten des Gurtes in seinen nicht geführten Umfangsbereichen vorzusehen. Diese kann z.B. durch Verlängerung des U-Profiles gebildet sein, die zumindest einen Teil des freiliegenden Gurtumfanges umschließen, wobei die Schenkel des U-Profiles im Bereich der jeweiligen Station im Sinne einer Öffnungsbewegung von der Gurtoberfläche bzw. im Sinne einer Schließbewegung an die Gurtoberfläche anlegbar sind. Durch diese Maßnahme wird der Gurt auf der Strecke sicher in allen Kurvenlagen geführt bzw. gehalten und kann in der jeweiligen Station ohne Probleme auseinandergerollt werden.

Ist die Überlappung seitlich, also im geführten Bereich der Mitnehmerwagen vorgesehen, so kann diese im Querschnitt etwa U-förmige Vertiefung in der Regel ausreichend sein. Fährt der Wagen im Bereich einer horizontalen Kurve bzw. einer Station senkrecht, können ortsfeste Andruckrollen vorgesehen werden, die den Gurt im Mitnehmerwagen halten.

Im Kurvenbereich bzw. im Bereich der jeweiligen Station werden die Mitnehmerwagen - wie beschrieben - senkrecht gestellt. Dies geschieht einem weiteren Gedanken der Erfindung gemäß dadurch, daß die Laufrollen der Mitnehmerwagen in spiralförmig angeordneten Trag- und Führungsschienen führbar sind.

Einem weiteren Gedanken der Erfindung gemäß, sind die den Fördergurt führenden bzw. haltenden Bauteile der Mitnehmerwagen mit einem rutschfesten Belag versehen, der ein Verdrehen des Fördergurtes innerhalb der Ausnehmungen verhindern soll.

Sind nur geringe Leistungen, kleine Förderlängen und keine freien Spannfelder erforderlich, so können anstelle der Förderseile auch Ketten als Zugmittel verwendet werden. Da Ketten schlupflos angetrieben werden und exakt abgelenkt werden können, besteht hier die Möglichkeit, die Mitnehmerwagen fest mit der bzw. den Ketten zu verbinden. Durch diese Maßnahme könnten die Stationen konstruktiv vereinfacht werden, wobei der Hauptvorteil des Systemes - nämlich die Kurvengängigkeit - vollständig erhalten bleibt.

Die Erfindung ist in der Zeichnung dargestellt und wird wie folgt beschrieben. Es zeigen:

Fig. 1    Darstellung eines Mitnehmerwagens für ein schlauchförmiges Förderband mit Ketten als Zugmittel im Geradlauf

Fig. 2    Darstellung eines Mitnehmerwagens für ein schlauchförmiges Förderband mit Förderseilen als Zugmittel in einer Horizontalkurve.

Fig. 3 u. 4    Prinzipskizzen von Mitnehmerwagen bei Gerad- und Kurvenführungen mit Festhaltevorrichtung für den Gurt

Fig. 5 u. 6    Prinzipskizze einer Station mit entsprechenden Umlenkeinrichtungen in verschiedenen Ansichten

fig. 7 u. 8    Prinzipskizze einer Station für gleichzeitige Be- und Entladung des Fördergurtes

Fig. 9    Draufsicht auf eine kurvengängige Fördereinrichtung in schematischer Darstellung

Fig. 10    Schematische Darstellung eines freien Spannfeldes

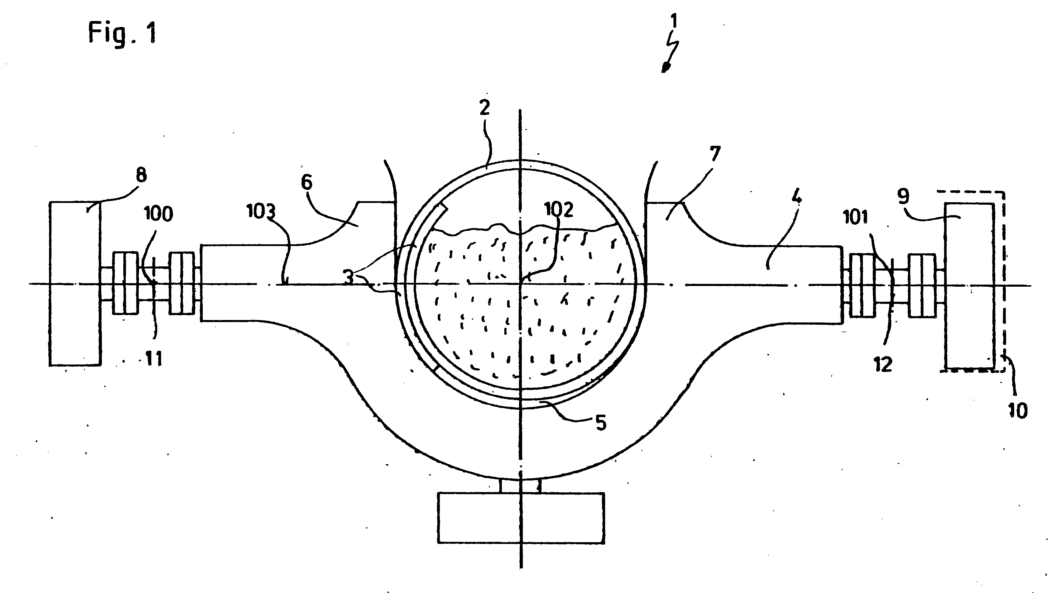

Figur 1 zeigt einen Mitnehmerwagen 1 für ein zu einem Schlauch zusammengerolltes Förderband 2. Die Überlappung 3 des Förderbandes 2 ist seitlich angeordnet. Der Mitnehmerwagen 1 besteht aus einem Rahmen 4 mit einer mittig angeordneten Vertiefung 5 zur Aufnahme des Fördergurtes 2. Der Rahmen 4 ist so ausgestaltet, daß vertikal gerichtete Schenkel 6,7 gebildet werden, zwischen denen der Fördergurt 2 seitlich geführt wird. In den äußeren Bereichen des Rahmens 4 sind Laufrollen 8,9 angeordnet, die zumindest partiell auf der Strecke im Bereich von Kurven oder im Bereich der jeweiligen Station mit Tragelementen 10 (nur angedeutet) zusammenwirken. Als Zugmittel werden Ketten (nicht dargestellt) verwendet, die in den Bereichen 11 und 12 am Rahmen 4 befestigt werden. Fährt der Mitnehmerwagen 1 in eine Be- oder Entladestation ein, so werden die fest mit der Kette verbundenen Mitnehmerwagen 1 mit der Kette umgelenkt. Der Aufbau der Station wird hierdurch vereinfacht. Um Zugkräfte vom Fördergurt 2 bei Geradeausfahrt fernzuhalten, sind einerseits die Ketten (nicht dargestellt) vorgesehen. Andererseits ist für die Kurvenfahrt ein weiterer Aspekt zu berücksichtigen, nämlich, eine bestimmte geometrische Zuordnung der Kompnenten zueinander. Die Mittelpunkte 100, 101 sowie der Mittelpunkt 102 des zusammengerollten Fördergurtes 2, liegen auf einer Geraden 103. Durch diese Maßnahme ist gewährleistet, daß bei Kurvenfahrt - bezogen auf den Kurvenmittelpunkt - die Zugmittel gleiche Strecken zurücklegen, so daß auch hier keine Zugkräfte in den Fördergurt 2 einfließen und diese ausschließlich von den Zugmitteln aufgenommen werden. Der hier nicht darstellbare Radienstrahl ist in einer der folgenden Figuren angedeutet.

Dieses System ist jedoch nur für geringe Leistungen sowie kurze Förderlängen und keine zu überbrückenden Spannfelder einsetzbar, es weist jedoch gegenüber Förderseilen als Zugmittel den Vorteil auf, daß Ketten schlupflos antreibbar sind und exakt abgelenkt werden können.

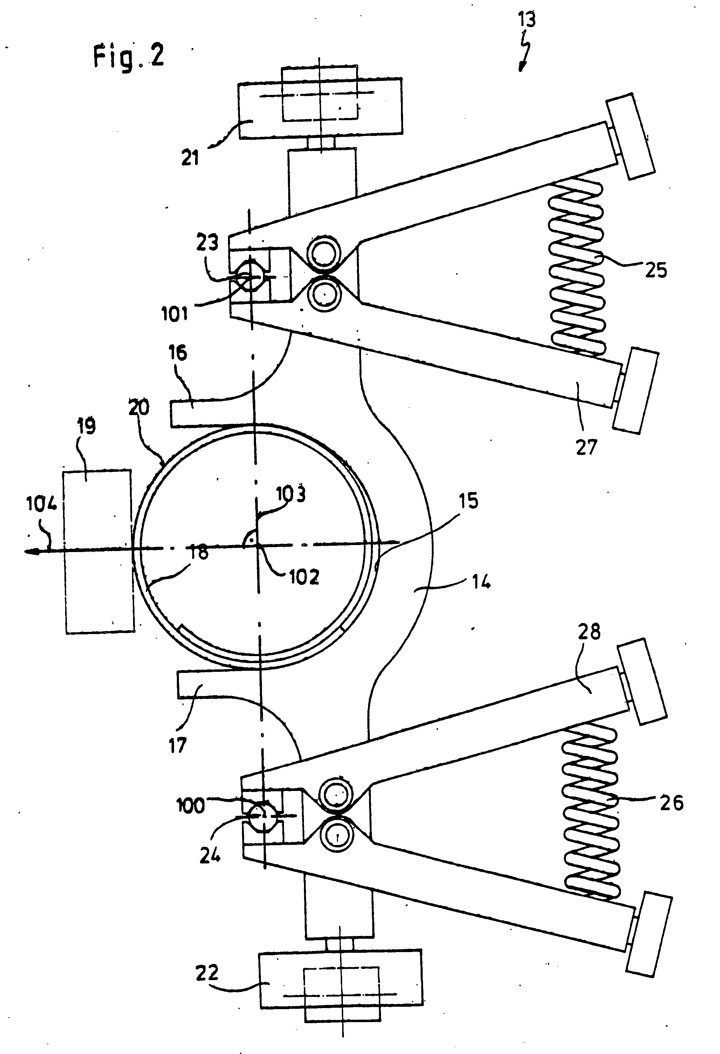

Figur 2 zeigt einen ähnlich aufgebauten Mitnehmerwagen 13, wie in Figur 1 dargestellt. Der Mitnehmerwagen 13 ist in senkrechter Stellung dargestellt.

Dies ist der Zustand, in welchem er horizontale Kurven durchfährt. Der Mitnehmerwagen 13 weist ebenfalls einen Rahmen 14 mit einer Vertiefung 15 und seitliche Führungsschenkel 16, 17 für das Förderband 18 auf. Hier sind die Kräfte beim Durchfahren der Kurve so groß, daß ortsfeste seitliche Andruckrollen 19 im Kurvenbereich vorgesehen sind, die am Gurtumfang 20 anliegen und den Gurt 18 in seiner Führung 15 - 17 halten. In den äußeren Bereichen des Rahmens 14 sind auch hier Laufrollen 21, 22 angeordnet, die in entsprechenden Führungen (nicht dargestellt) sowohl im Bereich der Kurve als auch im Bereich der jeweiligen Station eingreifen. Als Zugmittel werden hier - nach Art einer Seilbahn - Förderseile 23, 24 verwendet, die in mit Federn 25, 26 bestückten, zangenförmigen Klemmeinrichtung 27, 28 (Seilklemmen bei der Seilbahn) geführt sind. In der jeweiligen Station werden die Klemmeinrichtungen 27, 28 selbsttätig mittels Kuppelschienen geöffnet (nicht dargestellt) und die beabstandeten Mitnehmerwagen 13 werden von den Förderseilen 23, 24 zum Zwecke der Umlenkung getrennt. Weiterhin dargestellt sind die Mittelpunkte 100 - 102 (gem. Fig. 1) sowie die durch sie hindurch gelegte Gerade 103. Ferner angedeutet ist der senkrecht auf der Geraden 103 stehende und auf einen nicht dargestellten Kurvenmittelpunkt gerichtete Radiusstrahl 104, der hier vom Mittelpunkt 102 des Fördergurtes 18 in Richtung des Kurvenmittelpunktes verläuft.

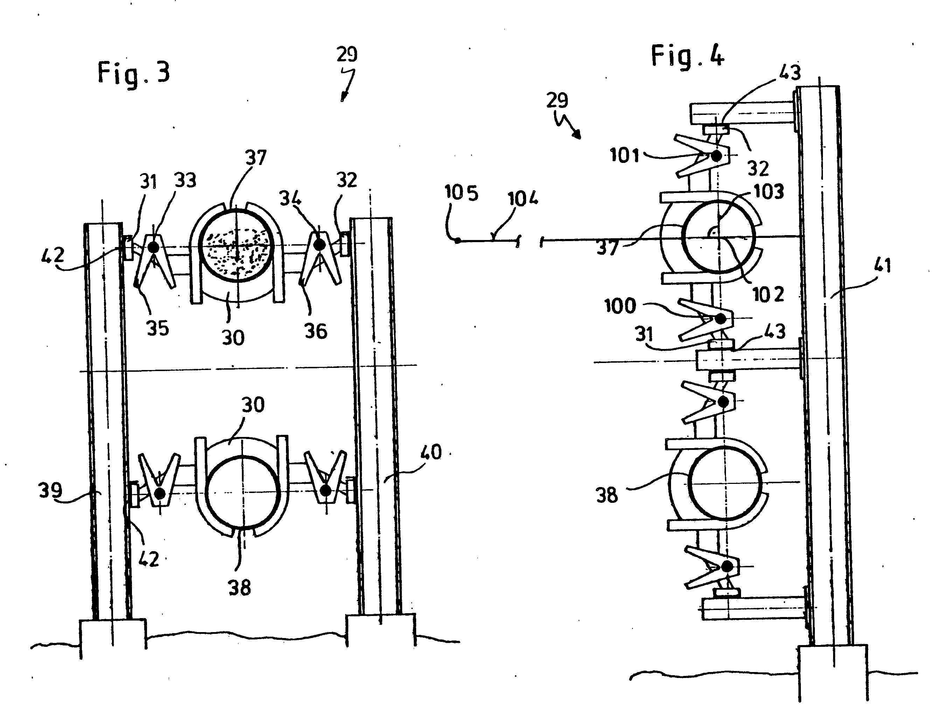

Die Figuren 3 und 4 zeigen Mitnehmerwagen 29 zum einen auf der Strecke geradegeführt (Fig. 3) und zum anderen in einer horizontalen Kurve (Fig. 4). Die Mitnehmerwagen 29 bestehen auch hier aus Rahmen 30, Laufrollen 31, 32, Förderseilen 33, 34 sowie zangenförmigen Klemmeinrichtungen 35, 36. Dargestellt ist sowohl der beladene 37 als auch der unbeladene Fördergurt 38 im Bereich von Stützen 39, 40 41 wobei die Mitnehmerwagen 29 im Kurvenbereich senkrecht gestellt sind. Im Bereich der Stützen sind Tragschienen 42, 43 vorgesehen, die als Führungselemente für die Laufrollen 31, 32 dienen.

Ferner dargestellt ist der auf den Kurvenmittelpunkt 105 gerichtete Radiusstrahl 104, der senkrecht auf der durch die Mittelpunkte 100 - 102 gebildeten Geraden 103 steht.

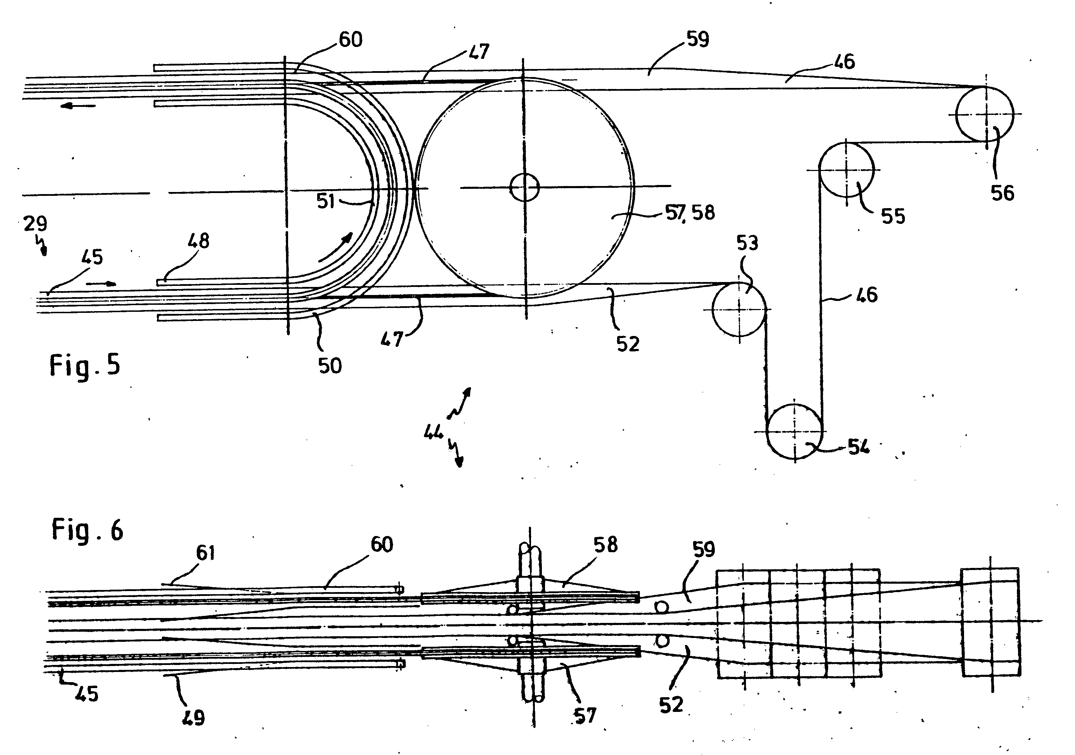

Die Figuren 5 und 6 zeigen als Prinzipskizze eine Umlenkstation 44 in verschiedenen Ansichten. Im Bereich 45 sind die Mitnehmerwagen 29 (Fig. 3 und 4) der Fördergurt 46 und die Förderseile 47 noch miteinander verbunden. Fahren die Mitnehmerwagen 29 in den Bereich 48 hinein, so werden die zangenförmigen Klemmeinrichtungen mittel konisch zulaufender Kuppelschienen 49 geöffnet und die Förderseile 47 werden von den Mitnehmerwagen 29 getrennt, wobei der Fördergurt 46 weiterhin in der Vertiefung in zusammengerolltem Zustand verbleibt.

Im Bereich 50 werden Fördergurt 46 und Mitnehmerwagen 29 dergestalt voneinander getrennt, daß die Mitnehmerwagen 29 vom Untertrum in den Bereich des Obertrums innerhalb der Führung 51 umgelenkt werden, wobei der Fördergurt 46 zunächst in Schlauchform gerade weitergeführt wird. Das Aufrollen und Entladen erfolgt im Bereich 52. Der nunmehr zu einem konventionellen Gurt geformte Fördergurt 46 wird über Umlenktrommeln 53 - 56 geführt, ggf. gespannt und umgelenkt. Die Förderseile 47 werden mittels Umlenkscheiben 57, 58 umgelenkt und ggf. gespannt. Das Zusammenrollen des Fördergurtes 47 erfolgt im Bereich 59.

Das Verbinden von Fördergurt 46 und Mitnehmerwagen 29 erfolgt im Bereich 60, indem der zusammengerollte Fördergurt 46 in die Vertiefung der umgelenkten Mitnehmerwagen 29 eingeführt wird. Die Förderseile 47 sind zwar hier auch bereits eingebracht, die zangenförmigen Klemmeinrichtungen jedoch noch geöffnet. Das Anklemmen erfolgt im konisch sich erweiternden Bereich 61.

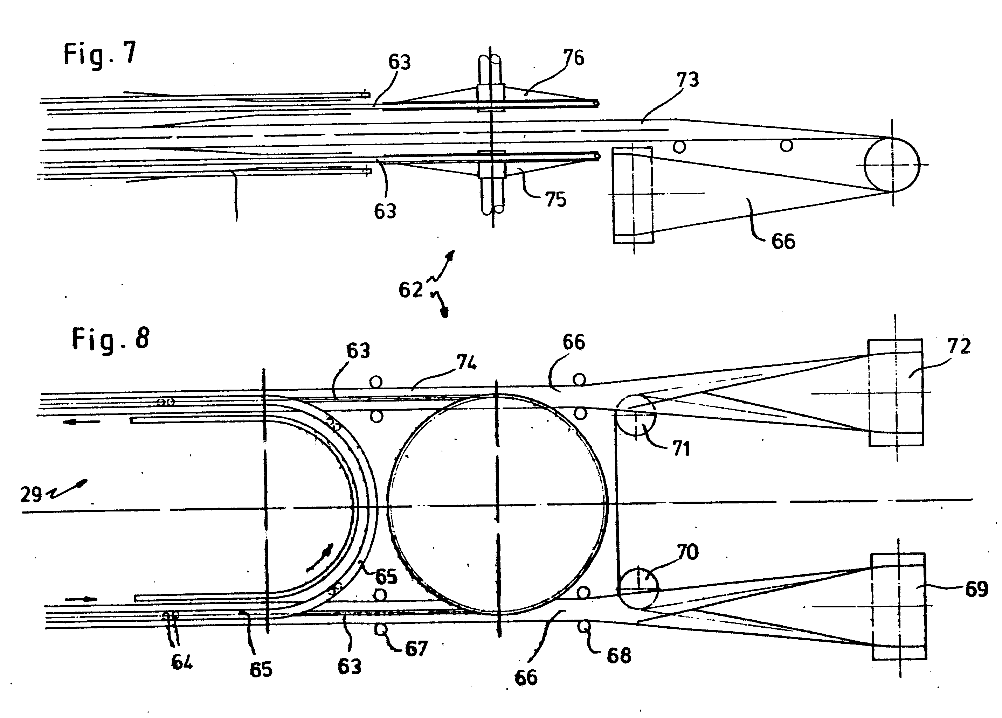

Die Figuren 7 und 8 zeigen ebenfalls eine Station 62, die ähnlich der in den Figuren 5 und 6 dargestellten Station aufgebaut ist. Der wesentliche Unterschied ist darin zu sehen, daß die Mitnehmerwagen 29 (Fig. 3 und 4) vor der Station 62 um 90° gedreht werden, damit diese senkrecht ankommen. Nach dem Abkuppeln von Förderseil 63 werden die Mitnehmerwagen senkrecht stehend und mit ihren Laufrollen 64 in entsprechenden Führungen 65 gehalten, in horizontaler Ebene umgelenkt und kuppeln auf der anderen Seite sofort wieder an die Förderseile 63 an und nehmen den Fördergurt 66 wieder auf. Nach der Trennung der Mitnehmerwagen 29 von Fördergurt 66 wird dieser als konventioneller Rollgurt weitergeführt und durch Rollenstationen 67, 68 gehalten. Nach dem Auseinanderrollen und Entladen des Fördergurtes 66 wird dieser dergestalt über mehrere Trommeln 69 - 72 umgelenkt, daß er gewendet wird. Da das Prinzip der Gurtführung und Seilführung bis auf den Unterschied zwischen Antriebs- und Spannscheibe gleich ist, ist hier ein Transport in beiden Richtungen möglich. Der Fördergurt 66 wird nach der Gurtwendung im Bereich 73 beladen und im Bereich 74 wieder zusammengerollt.

Die Förderseile 63 werden mittels Umlenkscheiben 75, 76 entsprechend umgelenkt.

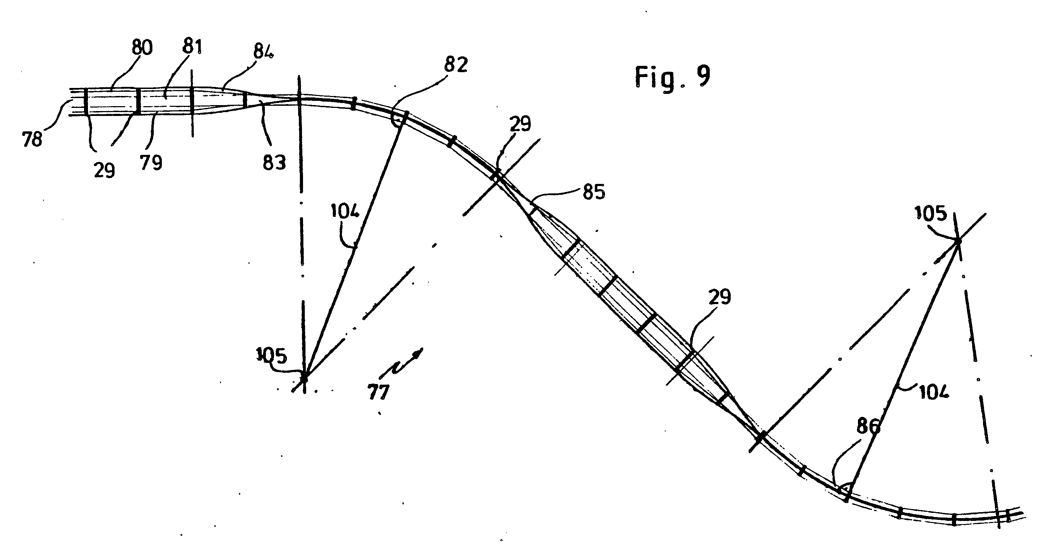

Figur 9 zeigt als Draufsicht eine kurvengängige Fördereinrichtung 77 in schematischer Darstellung. Die Mitnehmerwagen 29 (Fig. 3) sind im geraden Streckenbereich 78 in horizontaler Lage angeordnet. Die Förderseile 79, 80 sowie der Gurt 81 sind hierbei lediglich angedeutet. Vor der ersten Kurve 82 werden die Mitnehmerwagen 29 im Bereich 83 mittels spiralförmig ausgebildeter Führungsschienen 84 in etwa senkrechte Position gebracht (Fig. 4) und durchfahren in diesem Zustand die erste Kurve 82. Der umgekehrte Vorgang erfolgt im Bereich 85, wo die Mitnehmerwagen 29 wieder in horizontale Lage gedreht werden (Fig. 3). Der gleiche Vorgang des Senkrechtstellens der Mitnehmerwagen 29 erfolgt vor jeder weiteren Kurve 86.

Damit eine optimale Führung der Mitnehmerwagen 29 bei geringstmöglichen Zwangskräften in den Förderseilen 79, 80 möglich ist, ohne daß sich diese als Zugkräfte auf den Fördergurt 81 auswirken, werden die Mitnehmerwagen 29 immer so in die jeweilige Kurve bzw. Station geführt, daß die durch die Mittelpunkte 100, 101, (s. Fig. 2-4) der Förderseile 79, 80 oder Ketten sowie den Mittelpunkt 102 (s. Fig. 2-4) des Fördergurtes 81 gelegte Gerade 103 immer senkrecht zur Kurven- bzw. Umlenkrichtung verläuft. (Radiusstrahl 104) Jeder Mitnehmerwagen 29 wird mit mindestens einem Wagenabstand sowohl vor als auch nach jeder Kurve 82,86 bzw. der jeweiligen Station in die entsprechende senkrechte bzw. horizontale Position gedreht.

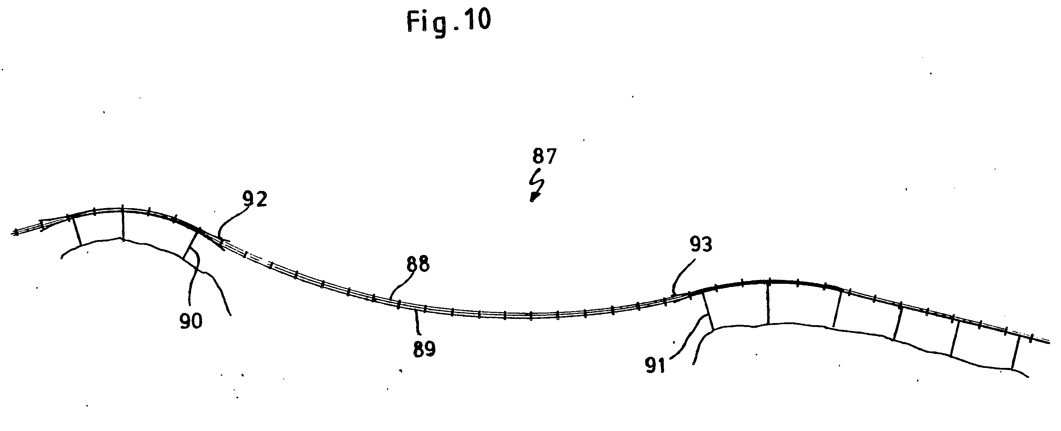

Figur 10 zeigt als Draufsicht eine schematische Darstellung eines freien Spannfeldes 87. Zu Überwindung größerer Strecken ohne besondere Stützkonstruktion ist es möglich, als Zugmittel Förderseile 88, 89 zu verwenden und diese wie bei einer Einseil-Umlaufbahn über eine größere Distanz zu spannen. An den Stützen 90, 91 sind zur sicheren Auffahrt auf diese Leitbleche 92, 93 vorgesehen, da aufgrund von Wind- und anderen Einflüssen ein Pendeln der Förderseile 88,89 im nicht geführten Bereich nicht vermieden werden kann.

## Ansprüche

1. Verfahren zum Führen von zu einem Schlauch zusammengerollten Förderbändern, insbesondere in vertikalen und/oder horizontalen Kurven, indem das Förderband im Bereich einer Station zusammengerollt und in diesem Zustand in, von Zugmitteln gezogenen, mit einer entsprechenden Ausnehmung versehenen beabstandeten Mitnehmerwagen eingebracht wird, dadurch gekennzeichnet, daß die Mitnehmerwagen dergestalt in die jeweils zu durchfahrende Kurve und/oder die jeweilige Station geführt werden, daß ausgehend vom jeweiligen Kurvenmittelpunkt der davon ausgehende Radiusstrahl immer senkrecht auf der durch die Mittelpunkte der Zugmittel sowie den Mittelpunkt des zusammengerollten Förderbandes gelegten Geraden steht.

2. Verfahren nach Anspruch 1, dadurch gekennzeichnet, daß der Radiusstrahl auf den Mittelpunkt des zusammengerollten Förderbandes ausgerichtet wird, wobei die von den Zugmitteln in der jeweiligen Kurve zurückgelegten Strecken gleich sind.

3. Verfahren nach den Ansprüchen 1 und 2, dadurch gekennzeichnet, daß die Mitnehmerwagen vor dem Durchfahren horizontaler Kurven bzw. beim Umlenken in der jeweiligen Station um bis zu 90˚ gedreht, in gedrehter Position durch die Kurven geführt und nach dem Verlassen der Kurvenbereiche in ihre Ausgangsposition zurückgedreht werden.

4. Verfahren nach den Ansprüchen 1 bis 3, dadurch gekennzeichnet, daß jeder Mitnehmerwagen sowohl vor als auch hinter dem jeweiligen Kurvenabschnitt bzw. der jeweiligen Station auf einer Strecke von mindestens einem Wagenabstand in gedrehter Position geführt wird.

5. Verfahren nach den Ansprüchen 1 bis 4, dadurch gekennzeichnet, daß im Kurvenbereich ortsfeste Durckrollen an die freiliegenden Umfangsbereiche des zusammengerollten Fördergurtes angelegt werden.

6. Verfahren nach den Ansprüchen 1 bis 5, dadurch gekennzeichnet, daß bei Verwendung von Förderseilen die Mitnehmerwagen im Bereich der jeweiligen Station von den Förderseilen sowie dem Fördergurt getrennt und in Führungsschienen durch, mit Fördergeschwindigkeit laufende Ketten umgelenkt und anschließend wieder an die ebenfalls umgelenkten Förderseile und den Fördergurt geklemmt werden.

7. Verfahren nach Anspruch 6, dadurch gekennzeichnet, daß die Förderseile nach dem Trennen von den Mitnehmerwagen mittels Scheiben umgelenkt, ggf. angetrieben und/oder gespannt werden.

8. Verfahren nach Anspruch 6, dadurch gekennzeichnet, daß der Fördergurt nach dem Trennen von den Mitnehmerwagen zunächst in Schlauchform weitergeführt, vor dem Entladepunkt auseinandergerollt, ggf. gespannt, durch Trommeln umgelenkt, ggf. wieder beladen und zusammengerollt sowie wieder an den umgelenkten Mitnehmerwagen befestigt wird.

9. Verfahren nach den Ansprüchen 1 bis 5, dadurch gekennzeichnet, daß bei Verwendung von Ketten als Zugmittel die Mitnehmerwagen fest mit den Ketten verbunden und mit diesen im Bereich der jeweiligen Station umgelenkt werden.

10. Mitnehmerwagen zum Aufnehmen eines zu einem Schlauch zusammengerollten Förderbandes, bestehend aus einem Rahmen, der in seinem mittleren Bereich eine Vertiefung zur Aufnahme des zusammengerollten Förderbandes aufweist sowie in seinen äußeren Bereichen mit Klemmeinrichtungen für die Förderseile sowie mit Laufrollen versehen ist, wobei die Klemmeinrichtungen aus federbelasteten Zangen bestehen, die in der jeweiligen Station selbsttätig mittels Kuppelschienen lösbar und festklemmbar sind, dadurch gekennzeichnet, daß die Vertiefung (5,15) einen etwa U-förmigen Querschnitt aufweist, wobei sich die geraden Schenkel (6, 7, 16, 17) des U-Profiles den Fördergurt (2, 18, 37, 38) seitlich haltend vertikal über die Mitte desselben erstrecken.

11. Mitnehmerwagen nach Anspruch 10, gekennzeichnet durch eine Festhaltevorrichtung (19) für den nicht geführten Umfangsbereich (20) des zusammengerollten Fördergurtes (18).

12. Mitnehmerwagen nach Anspruch 11, dadurch gekennzeichnet, daß die Festhaltevorrichtung (19) durch Verlängerung der Vertikalschenkel (16,17) des U-Profiles gebildet ist, die zumindest einen Teil des freiliegenden Gurtumfanges (20) umschließen, wobei die Schenkel (16, 17) des U-Profiles im Bereich der jeweiligen Station (44,62) im Sinne einer Öffnungsbewegung von der Gurtumfangsfläche (20) entfernbar bzw. im Sinne einer Schließbewegung an die Gurtumfangsfläche (20) anlegbar sind.

13. Mitnehmerwagen nach Anspruch 10, dadurch gekennzeichnet daß die Laufrollen (8, 9, 21, 22, 31, 32, 64) vor dem Kurvenbereich (83) bzw. der jeweiligen Station (44,62) in spiralförmig angeordnete Trag- und Führungsschienen (84) zum Drehen der Mitnehmerwagen (1, 13, 29) in die entsprechende Kurvenposition führbar sind.

14. Mitnehmerwagen nach den Ansprüchen 10 - 12, dadurch gekennzeichnet, daß die den Fördergurt (2, 18, 37, 18) führenden, bzw. haltenden Bauteile (4, 14, 30) des Mitnehmerwagens (1, 13, 29) mit einem rutschfesten Belag versehen sind.

Fig. 1

Fig. 2

Fig. 4

Fig. 3

Fig. 5

Fig. 6

Fig. 7

Fig. 8

EP 0 315 820 A1

Fig. 9

# Fig.10

EP 0 315 820 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-3 639 826 (GÜNTHER) <br> * Insgesamt, insbesondere Figuren 5,6; Positionen 1,4-6,8,9 * <br> --- | 1,2 | B 65 G 17/02 <br> B 65 G 15/08 |
| D,X | DE-B-1 203 672 <br> (POHLIG-HELKEL-BLEICHERT) <br> * INsgesamt * | 10-12, 14 | |
| D,Y | | 1-7,13 | |
| | --- | | |
| D,Y | DE-C-2 605 683 (L. & P. KÜPFER) <br> * Insgesamt * <br> --- | 1-7,13 | |
| A | EP-A-0 050 962 (BRIDGESTONE) <br> * Figur 5; Seite 7, Zeilen 3-22 * <br> ----- | 10-12 | |

RECHERCHIERTE
SACHGEBIETE (Int. Cl.4)

B 65 G
B 61 B

Der vorliegende Recherchenbericht wurde für alle Patentansprüche erstellt

| Recherchenort | Abschlußdatum der Recherche | Prüfer |
|---|---|---|
| DEN HAAG | 25-01-1989 | WERNER D.M. |